# EUROPÄISCHE PATENTSCHRIFT

(11) **EP 1 744 090 B1**
(45) Veröffentlichungstag und Bekanntmachung des Hinweises auf die Patenterteilung: **21.11.2012**
(21) Anmeldenummer: 06014327.8
(22) Anmeldetag: 11.07.2006
(51) Int. Cl.: F16L 33/207

(54) **Schlauchkupplung**
Pipe coupling
Accouplement pour tuyau

(30) Priorität: 12.07.2005 DE 102005032420; 12.07.2005 DE 202005010945 U
(43) Veröffentlichungstag der Anmeldung: 17.01.2007
(73) Patentinhaber: Voswinkel Entwicklungs- und Verwaltungs-GmbH & Co. KG, 58540 Meinerzhagen (DE)
(72) Erfinder: Weiland, F. Georg, Dipl.-Ing., 58540 Meinerzhagen (DE); Schmitt, Frank, 58540 Meinerzhagen (DE)
(74) Vertreter: Mentzel, Norbert

(56) Entgegenhaltungen:
- EP-A- 0 057 920
- AU-B2- 509 930
- DE-U1- 20 211 154
- FR-A- 1 396 459
- FR-A1- 2 318 375
- GB-A- 2 199 100
- JP-A- 60 211 189

## Beschreibung

Die Erfindung betrifft eine Schlauchkupplung gemäß dem Oberbegriff des Anspruchs 1. Diese Schlauchkupplungen werden insbesondere zum Anschluss von Hochdruckhydraulikleitungen an Armaturen verwendet. Im Befestigungsfall greifen im Inneren der Schlauchkupplung liegende Vorsprünge zur Befestigung an die Hydraulikschläuche an.

Bei einer bekannten Schlauchkupplung (GB 2 199 100 A) umfasst die Schlauchkupplung eine zylinderförmige Pressfassung, die zweiteilig ausgebildet ist und zwar mit einem äußeren Teil und einem inneren Teil, der Vorsprünge aufweist, die an den zu befestigenden Schlauch angreifen. Um die Schlauchkupplung mit einem Schlauch zu versehen, wird ein Schlauch auf das Kupplungselement aufgeschoben, wobei der Schlauch bereits die Pressfassung aufweist. Zur Befestigung wird dann von außen auf die äußere Fassung ein radialer Druck aufgebracht, um so die im Inneren befindlichen Vorsprünge an den Schlauch zu pressen. Da durch das Einpressen eine Längenverformung der Fassung stattfindet, passiert es, dass sich die Vorsprünge axial am Schlauch verschieben, wodurch leicht Risse (Haarrisse) im Inneren stattfinden können, die die Gebrauchsdauer der Schlauchkupplung beieinträchtigen.

Darüber hinaus ist der Materialaufwand solcher Pressfassungen groß. Bei einer anderen Ausführungsform gemäß EP 0 523 835 B1 ist auch eine zweiteilige Pressfassung vorgesehen mit einem äußeren und einem inneren Teil. Hierbei sind im inneren Teil Vorsprünge vorgesehen, die unterschiedliche Abstände zu einem anzuschließenden Schlauch einnehmen. Auch bei dieser Anordnung ist ein großer Materialaufwand zur Herstellung erforderlich. Die Herstellung ist durch die Vorsprünge relativ kostenaufwendig, darüber hinaus ist eine axiale Verschiebung zumindest eines Teiles der Pressfassung durch die unterschiedlichen Zahngrößen wiederum die Gefahr gegeben, dass sich der anzuschließende Schlauch unter der Einwirkung der Druckkräfte entweder verschiebt bzw. sehr hohe Belastungen am Nippel auftreten, die zu Mikrorissen führen.

Aus der Patentanmeldung EP 0 057 920 A1 ist eine Schlauchkupplung bekannt, bei der durch Vorsehen von dünnwandigen Brücken, gebildet durch zumindest eine Nut an der Außenseite der Pressfassung, eine wesentliche Reduzierung der Längenänderung der Pressfassung beim Verpressen erreicht wird. Diese Brücken werden beidseitig von radialen, nach innen gerichteten Vorsprüngen an der Pressfassung vorgesehen. Im Bereich dieser Vorsprünge hat die Pressfassung ihre größte Wanddicke. Beim Verpressen wird Material der Pressfassung in Längsrichtung verschoben. Im Bereich der Brücken führt dies zum Auswölben der Brückenbereiche nach außen in die vorhandene Nut hinein, wodurch eine Längenänderung der Pressfassung vermieden wird. In diesen Bereichen der Brücken hebt damit die Pressfassung in nachteiliger Weise vom Schlauch ab. Andererseits kann im Bereich der Zähne die radial ausgeübte Kraft beim Verpressen zur Zerstörung des Nippels führen. Diese Schädigung bei Überpressung wird als Nippeleinfall bezeichnet.

Aufgabe der Erfindung ist es, eine Schlauchkupplung der im Oberbegriff des Anspruches 1 genannten Art so zu gestalten, dass sie bei geringem Materialaufwand eine sichere Halterung gewährleistet. Darüber hinaus soll die Pressfassung einfach, möglichst spanlos herstellbar sein. Darüber hinaus soll bei der Befestigung der Pressfassung keine axiale Verschiebung der Vorsprünge der Pressfassung auftreten.

Diese Aufgabe wird erfindungsgemäß dadurch erreicht, dass die Pressfassung als Hülse gestaltet ist bzw. eine Hülse als hülsenartigen Teil umfasst. Diese Hülse besitzt radial zum Schlauch verlaufende und zum Schlauch gerichtete als Vorsprünge ausgebildete Verformungen sowie an der Außenseite des Mantels der Hülse im Bereich der Verformungen Vertiefungen. Hierbei nehmen die Vertiefungen bei Überführung in den Befestigungsfall Materialbereiche der Verformungen auf. Diese einfache Ausgestaltung der Pressfassung gewährleistet zum einen durch die vorgesehenen Verformungen eine sichere Halterung des anzuschließenden Schlauches und andererseits durch die an der Außenseite vorgesehenen Vertiefungen, dass beim Pressvorgang Materialbereiche der Verformung aufgenommen werden können. Günstigerweise erfährt die Pressfassung beim Pressvorgang bis zum Befestigungsfall keine Längenänderung, da die innenliegenden Verformungen bei großem Widerstand in die Vertiefungen zurückweichen können und somit die Position der Verformungen im Bezug auf die axiale Ausrichtung des Schlauches unverändert bleibt. Eine axiale Verschiebung der Verformungen erfolgt nicht.

Darüber hinaus hat die vorgenannte Ausgestaltung der Hülse mit der oder den radial nach innen gerichteten Verformungen und im gleichen Bereich der Hülse vorgesehenen Vertiefungen am Außenmantel den Vorteil, dass die Vertiefungen auch als Kompensationsreserve bei einer Überpressung dienen können. Bei bekannten Schlauchkupplungen wird ein geringfügiges Maß an Überpressung toleriert, was zu einem Einfall des Pressnippels des Kupplungselementes führt, da von außen nicht feststellbar ist, wann beim Pressvorgang der Befestigungsfall erreicht ist, nämlich wann die Verformungen soweit in das Drahtgeflecht eingedrungen sind, dass eine feste Verbindung mit dem Schlauch erzielt ist. Man führt daher bisher den Pressvorgang weiter, d.h. nimmt eine geringfügige Überpressung vor. Dies führt dazu, dass der Pressnippel des Kupplungselementes nach innen ausweicht. Man bezeichnet den Vorgang als Einfall des Nippels. Dadurch verändert sich der Innendurchmesser des Kupplungselementes im Bereich des Einfalls des Nippels, was mittels Kugeldornen ermittelt wird. Ein solcher Einfall wird als Maß für eine fachgerechte Verpressung verwendet, da man sicher sein kann, dass eine feste Verbindung zwischen Pressfassung und Schlauch vorliegt. Nachteilig ist jedoch, dass die Verringerung des Innendurchmessers eine Drosselwirkung erzeugt, was Turbulenzen nach sich ziehen kann. Bei der vorliegenden Erfindung dienen die Vertiefungen als Kompensationsreserve, so dass der Pressnippel auch bei einem gewissen Maß an Überpressung nicht einfällt. Das Verpressen führt, wie oben beschrieben, bis zum Befestigungsfall zu keiner Längenänderung der Pressfassung, da Material der Verformungen in die Vertiefungen zurückweichen kann. Bei einer Überpressung wird durch die Presskraft eine Gegenkraft erzeugt, die dazu führt, dass Material der Pressfassung ebenfalls in die Vertiefungen, aber auch am Ende der Hülse in Längsausdehnung der Pressfassung sowie durch Anpassung der Zahnhöhen an diese Gegenkraft ausweicht. Ein Einfall des Nippels erfolgt nicht, zumindest bis zu einem gewissen Maß an Überpressung. Die von außen sichtbare axiale Verlängerung der Pressfassung kann bei der erfindungsgemäßen Schlauchkupplung als Maß für die sichere und fachgerechte Verbindung verwendet werden. Auf eine Messung des Innendurchmessers des Nippels kann verzichtet werden, was insbesondere bei gebogenen Armaturen von Vorteil ist.

Die Ausgestaltung der Pressfassung erlaubt eine einfache Herstellung durch bekannte Umformverfahren. Bei der Erzeugung der Verformungen und der Vertiefungen, die beispielsweise durch eine Kaltverfestigung erfolgt, ergibt sich außerdem, dass das Material, das die Verformungen bildet, sehr stark verfestigt wird, während das Material der Umgebung der Vertiefungen weicher gestaltet ist. Günstigerweise werden die Verformungen bzw. die Vertiefungen durch Stauchung der hülsenartigen gebildet. Durch die Stauchung wird gewährleistet, dass eine mit gleicher Wandstärke ausgebildete Hülse als Vorsprünge ausgebildete Verformungen erhält, die sicher den Schlauch kontaktieren können. Bei einer weiteren Ausführungsform sind die Verformungen Faltungsbereiche der hülsenartigen Pressfassung. Eine derartige Hülse kann ohne großen Materialaufwand durch Tiefziehen, Rohrziehen u.a. bekannte Umformverfahren hergestellt werden.

Bei einem besonderen Ausführungsbeispiel der Erfindung sind die Verformungen bzw. die Vertiefungen durch Rollieren der Hülse gebildet. Hierbei wird gewährleistet, dass die Verformungen im Bereich, an den sie an den Schlauch angreifen, eine besondere Verfestigung erhalten, während an der Außenseite das Material eine geringe Härte aufweist.

Vorteilhafterweise sind die Verformungen im Befestigungsfall leicht in axialer Richtung geneigt, um so etwaige Längenveränderungen der Hülse leichter aufnehmen zu können, hierdurch können die Verformungen nur mit einem geringeren Materialbereich in die Vertiefungen zurückbewegt werden. Die auf den Schlauch beim Pressvorgang auf den Pressnippel wirkende Kraft erfolgt radial in den Vertiefungen.

In einem Ausführungsbeispiel ist die Hülse an ihrem Ende mit einem ringförmigen Verlängerungswinkel versehen, dessen axialer Schenkel den gleichen Außendurchmesser wie die Hülse aufweist, um so beim Pressvorgang einen einheitlichen Durchmesser der Pressverformung zu erhalten. So überlagert der Verlängerungswinkel einen eingezogenen Bereich der Hülse. Hierbei ist im Überlagerungsbereich an dem Kupplungselement eine radial nach außen weisende Rippe vorgesehen, die an ihrem freien Ende eine muldenartige Einbuchtung trägt, in die im Befestigungsfall der Überlagerungsbereich eingedrückt werden kann, so dass eine formschlüssige Halterung für die Pressfassung entsteht. Darüber hinaus bildet der ringförmige Verlängerungswinkel eine Versteifung der Hülse. Besonders vorteilhaft ist es, wenn der radiale Schenkel des ringförmigen Verlängerungswinkels eine Schulter am Kupplungselement im Befestigungsfall hintergreift, so dass insgesamt eine formschlüssige Halterung der Pressfassung am Kupplungselement gewährleistet ist.

Bei einer weiteren vorteilhaften Ausführungsform ist die Pressfassung einteilig gestaltet. Die einstückige Pressfassung umfasst einen Teil, der als Anschlussteil zur Verbindung mit dem Kupplungselement dient und umfasst des Weiteren einen Teil, der hülsenartig gestaltet ist.

Bei einer vorteilhaften Ausführungsform ist die Hülse oder der hülsenartige Teil der Pressfassung mit einer spiralförmig verlaufenden Verformung versehen, die als Schlauchgreifvorrichtung dient, sowie mit einer spiralförmig verlaufenden Vertiefung auf der Außenseite des Mantels im Bereich der Verformung. Der spiralförmige Verlauf der Verformung hat zwei Vorteile. Zum einen verteilt sich beim Verpressen die radial wirkende Kraft besser, anders als bei mehreren ringförmig an der Pressfassung angeordneten Verformungen. Der spiralförmige Verlauf der Verformungen minimiert damit das Risiko der Schädigung des Druckträgers, z.B. des Drahtgeflechtes. Der spiralförmige Verlauf der Verformung hat den zusätzlichen Vorteil, dass sich die einstückige Pressfassung leicht herstellen lässt. Die Verformung in dieser erfindungsgemäßen Pressfassung lässt sich durch einen Rolliervorgang herstellen. Zuerst wird beispielsweise durch Tiefziehen ein napfförmiger Tiefziehrohling erhalten, der einen zylindrischen hülsenartigen Teil und endseitig ein eingeformtes Anschlussteil besitzt. In diesen Tiefziehrohling wird durch einen Rollvorgang, z.B. Gewinderollformen mit einem Innendorn, die spiralförmige Verformung im Inneren des hülsenartigen Teiles erzeugt und gleichzeitig auf der Außenseite des Mantels der Pressfassung im Bereich der Verformung eine spiralförmige Vertiefung. Der spiralförmige Verlauf der Verformung ermöglicht es in einfacher Weise den Innendorn wieder aus dem fertig umgeformten Teil herauszudrehen. Durch diese Entformbarkeit des Werkzeuges ist insbesondere eine Miniaturisierung der Pressfassung möglich, d.h. es lassen sich auch Pressfassungen für kleine Schläuche herstellen.

Bei einer bevorzugten Ausführungsform zeigt die spiralförmig angeordnete Verformung bzw. die radial vorgesehenen Verformungen im Querschnitt einen symmetrischen oder einen asymmetrischen Zahn. Eine asymmetrische Querschnittsgestaltung der Verformung hat zusätzliche Vorteile. In diesem Fall ist die zahnförmige Verformung so gestaltet, dass diese Verformung vor der Verpressung einen in Richtung Kupplungselement versetzten Angriffspunkt mit dem Schlauch aufweist. Dies bedeutet, dass die Spitze des Zahnes nicht mittig, sondern nach links in Richtung Kupplungselement bzw. Anschlussteil der Pressfassung versetzt ist, wenn der Schlauch bei der Montage von rechts her in die Pressfassung eingeführt wird. Ein solcher spitzer Zahn ist vorzugsweise dreieckförmig geformt, wobei die Hypotenuse des Dreiecks rechts von der Spitze des Zahnes, also vom Angriffspunkt weg, verläuft. Die zum Angriffspunkt führende Kathete verläuft nahezu senkrecht zur Längsachse der Pressfassung oder ist sogar so geneigt, dass der Zahn axial in Richtung Kupplungselement geneigt ist. Das somit asymmetrisch verteilte Material der Verformung bewirkt beim Verpressen, dass sich das Material der Verformung leicht nach links verschiebt, d.h. in Richtung Kupplungselement anlegt, bevor es als Schlauchgreifvorrichtung den Schlauch fasst. Die Zähne greifen somit schräg an den Schlauch an. Wird nun auf den befestigten Schlauch eine Zugbelastung ausgeübt, so bewirkt das Ziehen am Schlauch, dass sich die schräg an den Schlauch angreifenden Zähne aufrichten und noch stärker an den Schlauch angedrückt werden. Dies erzeugt eine zusätzliche Haltekraft. Somit gewährleistet die besondere Querschnittsform der Zähne eine Selbsthemmung der Schlauchkupplung. Je spitzer die Zahnform ist, um so stärker ist der Effekt der Selbsthemmung.

Bei einer weiteren Ausführungsform ist die Verformung im Querschnitt trapezförmig gestaltet. Diese Form stellt eine Abwandlung eines im Querschnitt dreieckförmigen spitzen Zahns dar. Es wird in diesem Fall eine breite Spitze vorgesehen. Eine solche trapezförmige Gestalt des Zahnes kann des Weiteren durch Abrunden der Ecken einen weichen Zahnumriss erhalten. Die vorgenannte weiche Zahnquerschnittsform wird insbesondere dann bevorzugt, wenn die Schlauchkupplung für Mikroschläuche eingesetzt wird. Durch die weiche Zahnkontur wird das Risiko der Schädigung des Schlauches minimiert. Die Zahnkontur kann somit an das Gewebe des Schlauches und an den Einsatzzweck des Schlauches angepasst sein.

Beim Pressvorgang wirkt auf den Schlauch und auf den Pressnippel eine radiale Kraft. Etwaige Längenveränderungen der Pressfassung werden auch bei Vorsehen einer Verformung mit asymmetrischen Querschnitt vermieden, da Material der Verformung in die Vertiefung zurückbewegt werden kann. Die Vertiefung stellt auch hier eine Kompensationszone dar. Vorteilhafterweise ist die Verformung im Befestigungsfall - wie oben beschrieben - leicht in axialer Richtung geneigt. Hierdurch wird die Verformung nur mit einem geringeren Materialbereich in die Vertiefung zurückbewegt und andererseits wird eine Selbsthemmung der Schlauchkupplung bewirkt, da durch Abzugsbewegungen ― beispielsweise durch Ziehen am Schlauch ― die geneigten Verformung wieder aufgerichtet und damit fester an oder in den Schlauch gedrückt wird.

In der Zeichnung ist der Erfindungsgegenstand in mehreren Ausführungsbeispielen dargestellt und zwar zeigen:
- Fig. 1: eine Schlauchkupplung in auseinandergezogener Darstellung,
- Fig. 2: Schnittdarstellung einer erfindungsgemäßen Pressfassung,

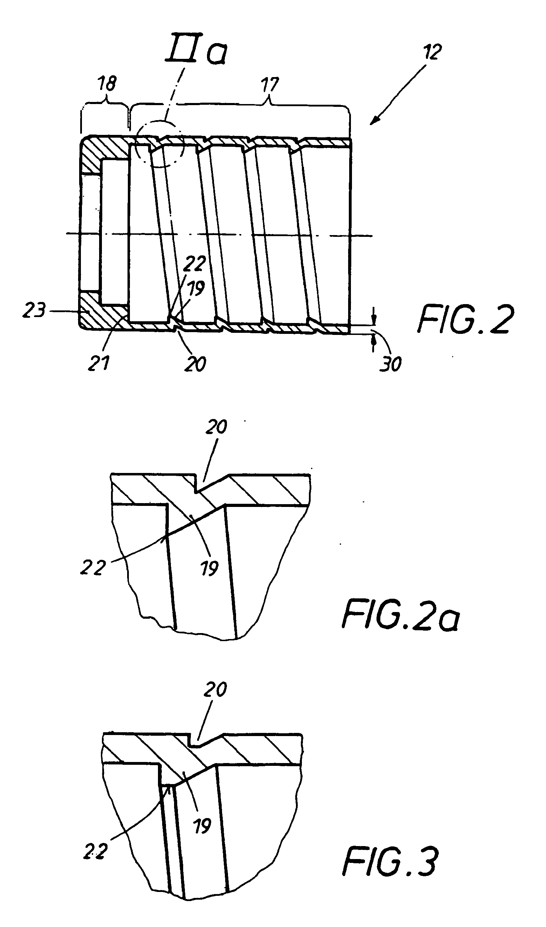

- Fig. 2 a: vergrößerter Ausschnitt aus Fig. 2,

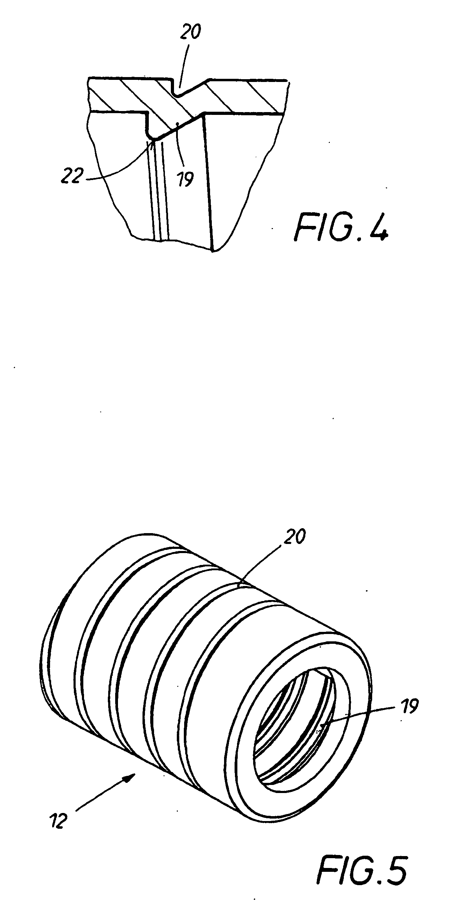

- Fig. 3 und 4: vergrößerte Schnittdarstellungen weiterer Verformungen,
- Fig. 5: perspektivische Ansicht einer Pressfassung gemäß Fig. 2,

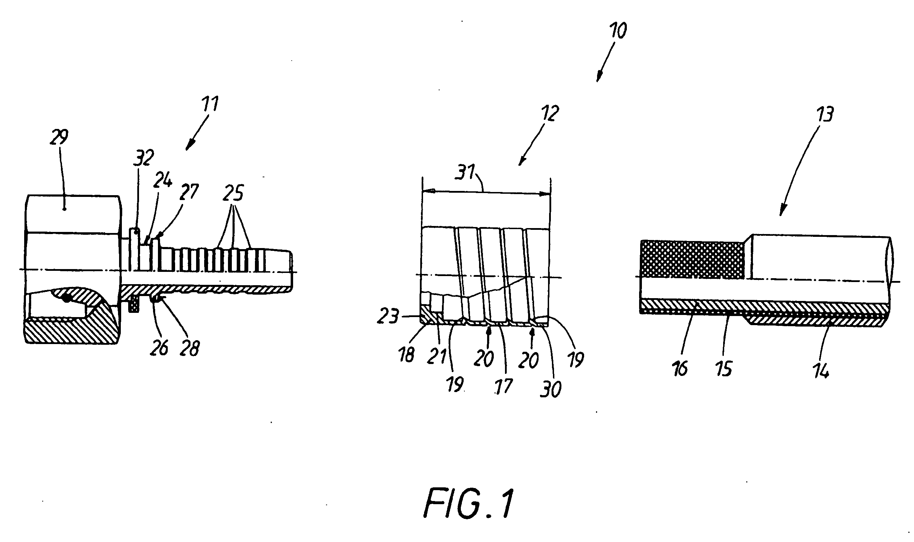

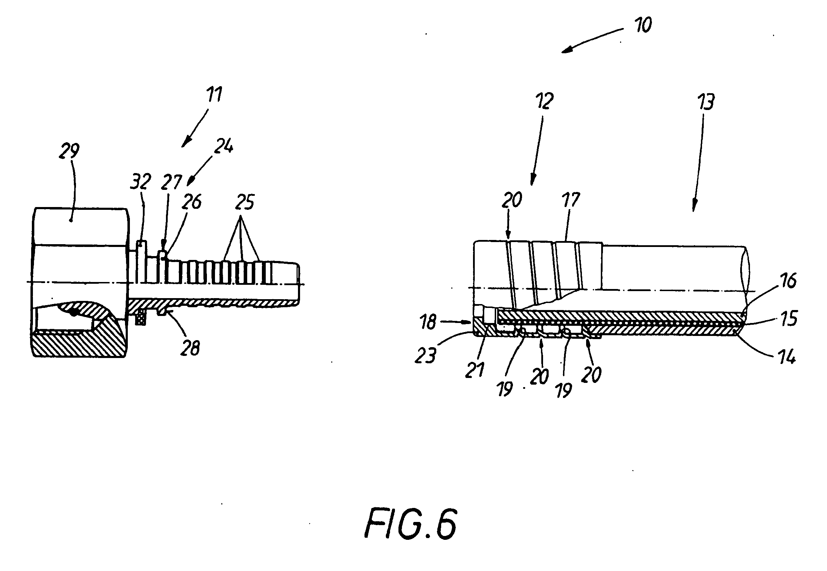

- Fig. 6: in auseinandergezogener Darstellung das Kupplungselement und die Pressfassung mit dem Schlauch gemäß Fig. 1,

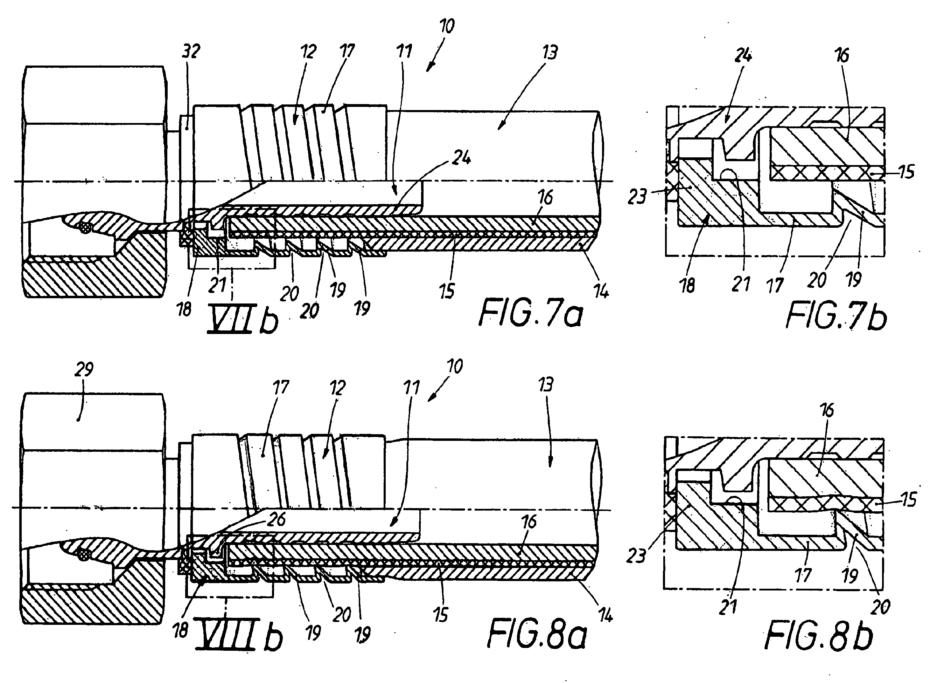

- Fig. 7a: ein weiteres Ausführungsbeispiel der Schlauchkupplung in der Montagelage,
- Fig. 7b: eine Einzelheit gemäß VII b der Fig. 7 a,
- Fig. 8a: die Schlauchkupplung nach Fig. 7 beim Übergang in die Befestigungslage,
- Fig.8b: einen Ausschnitt nach VIII b der Fig. 8 a in größerem Maßstabe,

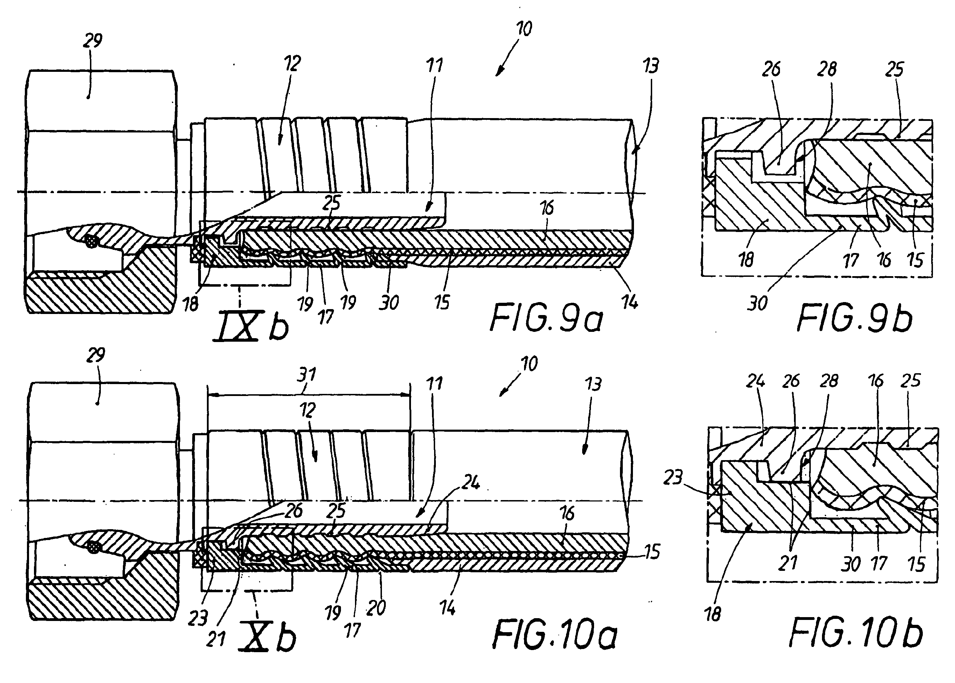

- Fig. 9a: die Schlauchkupplung in weiterer Überführung in die Befestigungslage,
- Fig. 9b: einen Ausschnitt IX b nach Fig. 9 a im größerem Maßstabe,
- Fig. 10a: die Befestigungslage der Schlauchkupplung,
- Fig. 10b: ein größerer Ausschnitt nach X b in Fig. 10 a,

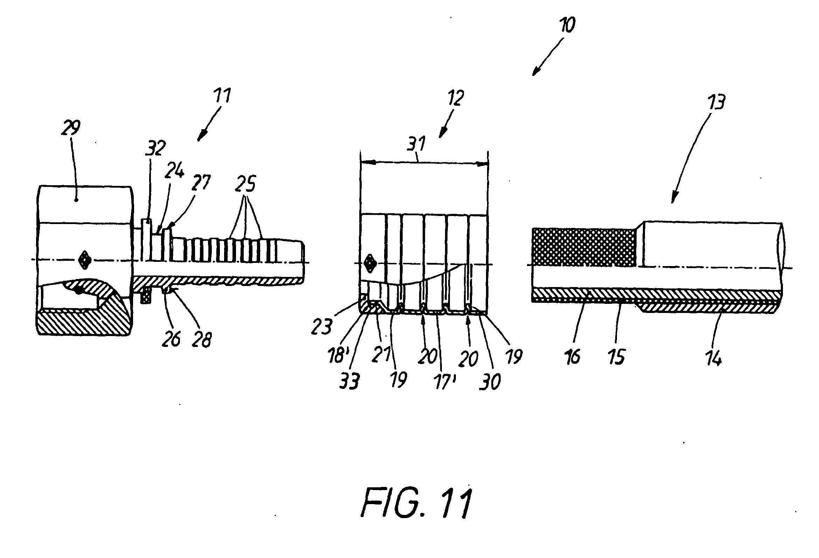

- Fig. 11: eine weitere Schlauchkupplung in auseinandergezogener Darstellung,

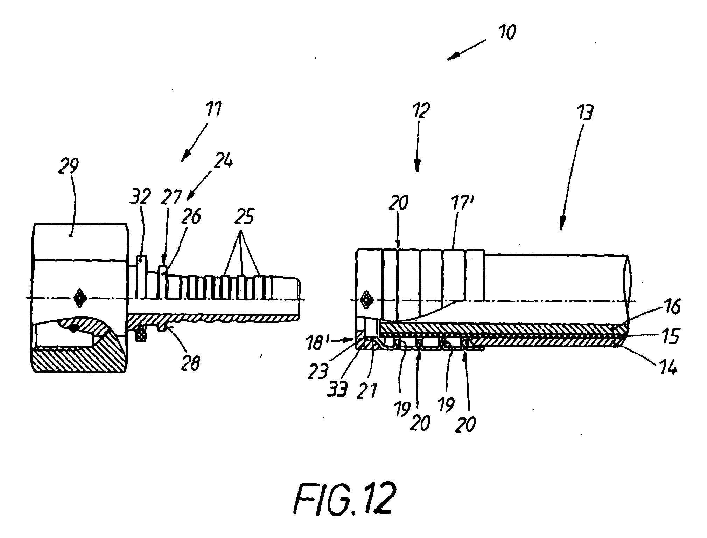

- Fig. 12: in auseinandergezogener Darstellung Kupplungselement und Pressfassung mit dem Schlauch gemäß Fig. 11,

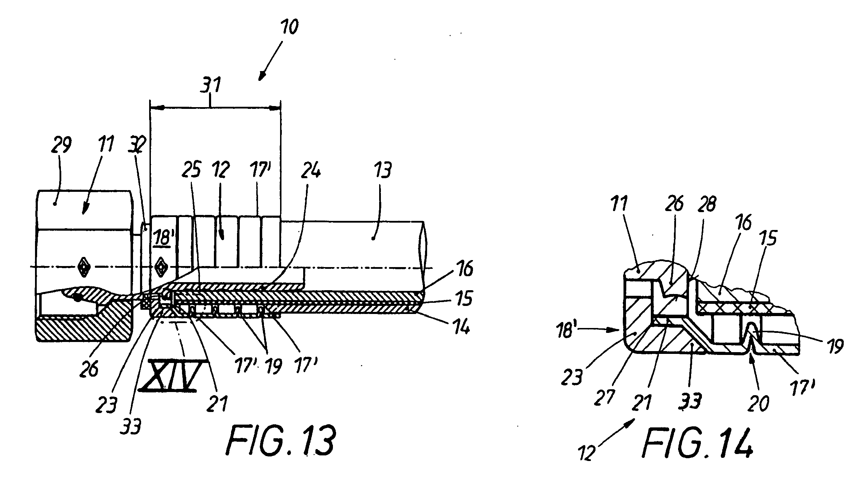

- Fig. 13: die Schlauchkupplung in der Montagelage,
- Fig. 14: in größerem Maßstabe die Einzelheit XIV nach Fig. 13,

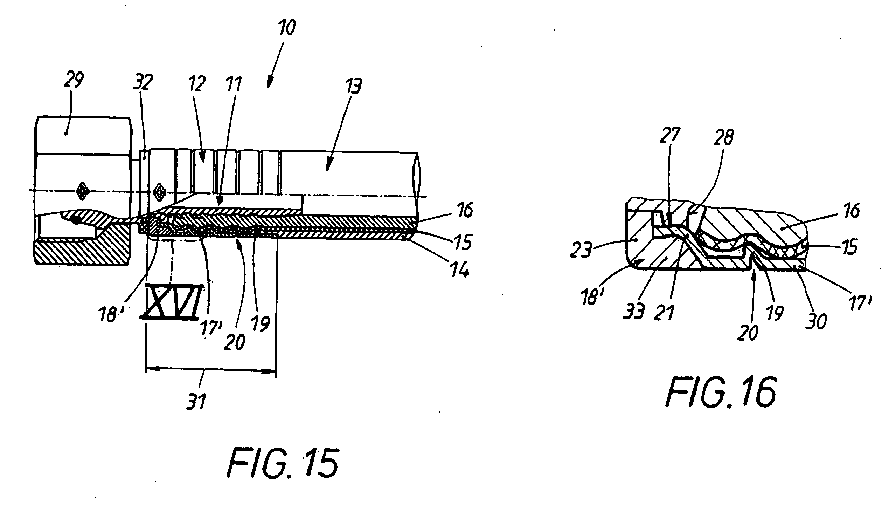

- Fig. 15: die fertige Schlauchkupplung mit aufgepresster Pressfassung in der Befestigungslage,
- Fig. 16: in größerem Maßstabe die Einzelheit XVI nach Fig. 15.

In Fig. 1 ist in auseinandergezogener Darstellung eine Schlauchkupplung 10 dargestellt. Sie besteht aus einem Kupplungselement 11 und einer Pressfassung 12. An diese Schlauchkupplung 10 wird ein Hochdruckschlauch 13 angeschlossen. Dieser Hochdruckschlauch 13 ist mit einer Gummiummantelung 14, mit einem Drahtgeflecht 15 und einem Innenmantel 16 versehen.

Die einstückige Pressfassung 12 besteht aus einem hülsenartigen Teil 17 mit gleichbleibender Wandstärke 30 und einem endseitigen Anschlussteil 18. Der Mantel des hülsenartigen Teils 17 weist eine radial ausgerichtete Verformung 19 auf, die an der Außenseite eine Vertiefung 20 in der Mantelfläche des hülsenartigen Teils 17 bildet.

Wie insbesondere die Fig. 2 zeigt, ist die Pressfassung 12 im Anschlussteil 18 mit einer Abstufung 21 versehen. Von dieser Abstufung 21 ragt endseitig ein nach innen gerichteter radialer Schenkel 23 ab. Der radiale Schenkel 23 des Anschlussteils 18 liegt bei der fertigen Schlauchkupplung 10 hinter einer Schulter 26 des Kupplungselementes 11. Die Schulter 26 bildet zugleich einen Anschlagflansch 28 zur Begrenzung der Bewegung des Hochdruckschlauches 13 beim Aufschieben auf das Kupplungselement 11. Das Kupplungselement 11 trägt noch einen Spannring 32, der verhindert, dass nach Aufschieben der Überwurfmutter 29 diese von dem Kupplungselement 11 herunterrutscht.

Wie insbesondere aus Fig. 5 zu ersehen, handelt es sich um eine Verformung 19 und eine Vertiefung 20, die einen spiralförmigen Verlauf entlang des hülsenartigen Teils 17 zeigen. Sie werden durch einen Rolliervorgang spanlos erzeugt.

Verschiedene erfindungsgemäße Pressfassungen 12 sind in den Figuren 2 bis 4 dargestellt. Im Querschnitt zeigt die Verformung 19 gemäß Figur 2 und 2a einen asymmetrischen Zahn. Die zahnförmigen Verformung 19 ist dabei so gestaltet, dass diese Verformung 19 einen in Richtung Kupplungselement 11 versetzten Angriffspunkt 22 aufweist. Dies bedeutet, dass die Spitze des Zahnes nicht mittig, sondern nach links in Richtung Kupplungselement 11 bzw. Anschlussteil 18 der Pressfassung 12 versetzt ist. Ein solcher spitzer Zahn ist vorzugsweise dreieckförmig geformt, wobei die Hypotenuse des Dreiecks rechts von der Spitze des Zahnes, also vom Angriffspunkt 22 weg verläuft. Die zum Angriffspunkt 22 führende Kathete verläuft im Beispiel gemäß Fig.2a senkrecht zur Längsachse der Pressfassung 12. Das somit asymmetrisch verteilte Material der Verformung 19 bewirkt beim Verpressen, dass sich das Material der Verformung 19 leicht nach links verschiebt, d.h. in Richtung Kupplungselement 11 anlegt, bevor die Verformung 19 als Schlauchgreifvorrichtung den Schlauch 13 fasst.

Bei einer weiteren Ausführungsform gemäß Fig. 3 ist die Verformung 19 im Querschnitt trapezförmig gestaltet. Gegenüber der in Fig.2a gezeigten Verformung 19 mit dem im Querschnitt dreieckförmigen spitzen Zahn ist in diesem Fall eine breite Spitze 22 vorgesehen.

Bei einer weiteren Ausführungsform gemäß Fig. 4 besitzt die Verformung 19 einen weichen Zahnumriss. Die Spitze 22 ist rund. Diese weiche Zahnquerschnittsform wird insbesondere dann bevorzugt, wenn die Schlauchkupplung für Mikroschläuche eingesetzt wird. Durch die weiche Zahnkontur wird das Risiko der Schädigung des Schlauches minimiert.

Nachfolgend soll anhand der Figuren 6 bis 10 der Anschluss des Schlauches 13 an das Kupplungselement 11 mittels der Pressfassung 12 dargestellt werden. In Fig. 1 sind das Kupplungselement 11, die Pressfassung 12 und der Schlauch 13 noch einzeln dargestellt. In Fig. 6 ist die Pressfassung 12 auf den Hochdruckschlauch 13 aufgeschoben. Hierzu ist die Gummiummantelung 14 des Hochdruckschlauches 13 bis auf das Drahtgeflecht 15 endseitig in einem axialen Bereich entfernt, um so das Aufschieben der Pressfassung 12 zu ermöglichen.

In Fig. 7 ist nun der Hochdruckschlauch 13 mit der Pressfassung 12 auf das Kupplungselement 11 aufgeschoben, d.h. die Montagelage dargestellt. Hierbei ist das Ende des Hochdruckschlauches 13 bis zur Schulter 26 geschoben. Die Abstufung 21 liegt genau gegenüber dem freien Ende der Schulter 26. Die Verformung 19 berührt noch nicht das Drahtgeflecht 15, vielmehr kann der Schlauch 13 noch von dem Kupplungselement 11 heruntergezogen werden. Dies ist auch besonders gut aus dem in größeren Maßstab gezeigten Ausschnitt VII b von Fig. 7a, nämlich aus Fig. 7b zu ersehen.

In Fig. 8a und 8b ist die Pressfassung 12 und damit das hülsenartige Teil 17 und das Anschlussteil 18 der Pressfassung 12 bereits leicht radial zusammengepresst.

Die Verformung 19 verbiegt bereits leicht das Drahtgeflecht 15. Die Vertiefung 20 verkleinert sich.

In Fig. 9 a und 9 b ist der Pressdruck weiter verstärkt worden. Das Drahtgeflecht 15 ist bereits wellenförmig am Ende des Schlauches 13 ausgebildet. Der Schlauch 13 selber hat sich in seinem freien Ende hin etwas gelängt. Die Verformung 19 ist axial bezüglich der Längsrichtung der Pressfassung 12, des Pressnippels 24 bzw. des Schlauches 13 geneigt. Die Vertiefung 20 ist schmaler geworden, wie insbesondere aus einem Vergleich von Fig. 7b und 8b und 9b zu ersehen ist. Mit anderen Worten das Material der Verformung 19 wird teilweise in die Vertiefung 20 verstaucht.

In der Fig. 10a und 10b ist schließlich die Befestigungslage erreicht, d.h. nach Verpressung der Pressfassung 12 mit dem Kupplungselement 11 und dem Hochdruckschlauch 13. Der Innenmantel 16 legt sich zwischen den Rippen 25 bereichsweise an bzw. die Rippen 25 des Pressnippels 24 greifen in den Innenmantel 16 des Hochdruckschlauches 13 ein. Die axiale Länge 31 der Pressfassung 12 hat sich während des Pressvorganges nicht geändert.

Eine Axialbewegung des Hochdruckschlauches 13 oder eine Axialbewegung der Pressfassung 12 tritt beim Verpressen nicht ein. Der Abstand der einzelnen Windungen der spiralförmigen Verformung 19 bleibt konstant und die spiralförmige Vertiefung 20 hat nahezu vollständig Material von der Verformung 19 aufgenommen, dies ist insbesondere aus Fig. 10 b zu entnehmen. Die Abstufung 21 liegt mit ihrem Ende fest auf der Schulter 26 des Pressnippels 24 auf. In der Befestigungslage nach Fig. 10 a ist der Hochdruckschlauch 13 sicher auf der Schlauchkupplung 10 befestigt, so dass die Schlauchkupplung 10 mit dem Hochdruckschlauch 13 als Hydraulikleitung verwendet werden kann.

Wie aus der Fig. 7 bis Fig. 10 zu ersehen ist, wird das asymmetrisch verteilte Material der Verformung 19 in der ursprünglichen Pressfassung 12 beim Pressvorgang sowohl in axialer als auch in radialer Richtung verformt und zwar derart, dass Bereiche der Verformung 19 in die als Kompensationszone dienende Vertiefung 20 zurückweichen können und die Verformung 19 selber in axialer Richtung eingelenkt wird. Der bereits auf der linken Seite der Verformung 19 angeordnete Angriffspunkt 22 verschiebt sich während des Verpressens noch weiter nach links. Die Verformung 19 greift somit schräg an den Schlauch 13 an. Wird nun auf den befestigten Schlauch 13 gemäß Fig. 10 eine Zugbelastung ausgeübt, so bewirkt das Ziehen am Schlauch 13, dass sich die schräg an den Schlauch 13 angreifende Verformung 19 aufrichtet und noch stärker an den Schlauch 13 angedrückt wird. Dies erzeugt eine zusätzliche Haltekraft. Somit gewährleistet die besondere Querschnittsform der asymmetrischen Verformung 19, bei der nämlich das Material der Verformung 19 bereits in der Montagelage axial in Richtung Kupplungselement 11 hin verlagert ist, eine Selbsthemmung der Schlauchkupplung 10. Die Kontur der Verformung 19 kombiniert mit dem spiralförmigen Verlauf der Verformung 19, der eine gleichmäßigere Verteilung des Pressdruckes während des Verpressens bewirkt, führt zu einer besonders guten Halterung des Schlauches 13 und damit zu einer funktionssicheren Schlauchkupplung (10).

Selbst ein gewisses Maß an Überpressung kann von der erfindungsgemäßen Schlauchkupplung 10 aufgenommen werden und dies ohne dass der Pressnippel 24 einfällt, d.h. sich nach innen, in Richtung der radialen Presskraft durchbiegt. Bevor eine solche Schädigung eintritt, kann bei Überpressung ein gewisses Maß an radial aufgebrachter Kraft noch von der Pressfassung 12 aufgenommen werden. Deren Material füllt erst die Vertiefungen vollständig aus, weicht dann nach und nach in Längsrichtung aus. Dieses Ausweichen in Längsrichtung führt zu einer Längung der Pressfassung 12. Diese hat jedoch keinen Einfluß auf die sichere und feste Verbindung zwischen der Verformung 19 und dem Schlauch 13, da die Verformung 19 ihre Position beibehält.

Auch bei einem nicht vorher geschälten Schlauch 13 kann eine sichere Verbindung erzielt und festgestellt werden, wenn die Verformung 19 die Gummiummantelung 14 beim Verpressen durchdringen und bis zum Drahtgeflecht 15 vordringen kann. Beim Verpressen wird das Material der Gummiummantelung 14 zwischen den Verformungen 19 eingeschlossen. Eine eventuelle Überpressung führt zu einer Dehnung des Materials der Gummiummantelung 14 und einem Verdrängen dieses Materials in Schlauchrichtung, was keinen Einfluß auf die feste Verbindung zwischen der Verformung 19 und dem Drahtgeflecht 15 des Schlauches 13, also auf die Funktion der Schlauchkupplung 10 hat.

In den Fig. 11 bis 16 ist eine weitere Schlauchkupplung 10 in auseinandergezogener Darstellung dargestellt. Gleiche Teile haben die gleichen Bezugszeichen. Die Schlauchkupplung 10 besteht aus einem Kupplungselement 11 und einer Pressfassung 12, welche an Hochdruckschlauch 13 angeschlossen werden sollen.

Die Pressfassung 12 besteht aus einer Hülse 17' mit gleichbleibender Wandstärke 30. Diese Hülse 17' weist mehrere radial ausgerichtete faltenartige Verformungen 19 auf, die an der Außenseite Vertiefungen 20 in der Mantelfläche der Hülse 17 bilden. Hierbei wurden die Verformungen 19 und Vertiefungen 20 der Hülse17' durch axiale Stauchung der Hülse 17' erzeugt. Die Verformungen 19 haben einen symmetrischen Querschnitt.

Wie aus Fig. 11 noch hervorgeht, ist die Hülse 17' auch mit einer Abstufung 21 versehen. Diese Abstufung liegt unten in einem axialen Winkelteil 33 des ringförmigen Verlängerungswinkels 18' an. Die Befestigung von Verlängerungswinkel 18' und Hülse 17' kann über einen Schrumpfvorgang erfolgen.

In Fig. 12 ist die Pressfassung 12 auf den Hochdruckschlauch 13 aufgeschoben. Hierzu ist die Gummiummantelung 14 bis auf das Drahtgeflecht 15 in einem axialen Bereich entfernt, um so das Aufschieben der Pressfassung 12 zu ermöglichen.

In Fig. 13 ist nun der Hochdruckschlauch 13 mit Pressfassung 12 auf das Kupplungselement 11 aufgeschoben. Hierbei ist das Ende des Hochdruckschlauches 13 bis zur Schulter 26 geschoben. Die Abstufung 21 liegt genau gegenüber dem freien Ende der Schulter 26. Die Verformungen 19 berühren noch nicht das Drahtgeflecht 15. Dies ist auch besonders gut aus dem in größeren Maßstab in Fig. 14 gezeigten Ausschnitt XIV. in Fig. 13 gezeigt.

In Fig. 15 ist schließlich der Befestigungszustand der Schlauchkupplung 10 nach Verpressung der Pressfassung 12 mit dem Kupplungselement 11 dargestellt. Wie zu erkennen ist, kommt bei dem Pressvorgang die faltenartige Verformung 19 der Pressfassung 12 in Kontakt mit dem Schlauch 13, teilweise werden die Verformungen 19 in axialer Richtung verschwenkt. Durch diese Verpressung werden auch die Rippen 25 des Pressnippels 24 des Kupplungselementes 11 in den Innenmantel 16 des Schlauches 13 gedrückt. Die axiale Länge 31 der Pressfassung 12 ändert sich nicht.

Wie aus Fig. 16 noch zu ersehen ist, sind die faltenartigen Verformungen 19 beim Pressvorgang sowohl in axialer als auch in radialer Richtung verformt und zwar derart, dass Bereiche der Verformung 19 in der Vertiefung 20 zurückweichen können und teilweise die Verformung selber in axialer Richtung eingelenkt wird.

Eine Axialbewegung des Hochdruckschlauches 13 oder eine Axialbewegung der Pressfassung 12 tritt nicht ein. Der Abstand der einzelnen Verformung 19 voneinander bleibt konstant. Wie noch aus Fig. 16 zu erkennen ist, wird die Abstufung 21 der Hülse 17 in eine Mulde 27 der Schulter 26 eingedrückt.

Wichtig in dem vorliegenden Ausführungsbeispiel nach Fig. 11 bis 16 ist, dass die Verformungen 19 und Vertiefungen 20 von Anfang an, also von der Montagelage bis zur Befestigungslage auch axial geneigt vorgesehen sein können. Die axiale Neigung könnte im Rollierverfahren durch Schrägstellung bzw. Neigung der Rollierscheiben erzeugt werden.

Die dargestellten Ausführungsformen sind jeweils nur eine beispielsweise Verwirklichung der Erfindung. Diese ist nicht darauf beschränkt. Vielmehr sind noch mancherlei Abänderungen möglich.

### Bezugszeichenliste:

- 10: Schlauchkupplung
- 11: Kupplungselement
- 12: Pressfassung
- 13: Hochdruckschlauch
- 14: Gummiummantelung
- 15: Drahtgeflecht
- 16: Innenmantel von 13
- 17, 17': hülsenartiges Teil, Hülse
- 18, 18': Anschlussteil, ringförmiger Verlängerungswinkel
- 19: Verformung
- 20: Vertiefung
- 21: Abstufung
- 22: Angriffspunkt, Spitze
- 23: radialer Winkelteil von 18
- 24: Pressnippel von 11
- 25: Rippen an 24
- 26: Schulter
- 27: Mulde an 26
- 28: Anschlagflansch
- 29: Überwurfmutter
- 30: Wandstärke von 17
- 31: axiale Länge von 12
- 32: Spannring
- 33: axialer Winkelteil von 18

## Patentansprüche

1. Schlauchkupplung (10), insbesondere für Hochdruckhydraulikleitungen, mit einem rohrartigen Kupplungselement (11), das an einem Ende an eine Armatur anschließbar ist und dass am anderen Ende einen Pressnippel (24) zur Aufnahme eines Schlauches (13) aufweist, mit einer zylinderförmigen Pressfassung (12), durch die der Schlauch (13) an dem Kupplungselement (11) festlegbar ist,
hier umgreift im Montagefall die Pressfassung (12) den Pressnippel (24) mit dem aufgeschobenen Schlauch (13) und im Befestigungsfall greift die Pressfassung (12) mit Vorsprüngen an den Schlauch (13) an, wobei die Schlauchkupplung (10) durch Anwendung eines äußeren radialen Druckes auf die Pressfassung (12) von dem Montagefall in den Befestigungsfall führbar ist,
wobei die Pressfassung (12) zumindest bereichsweise als Hülse (17, 17') gestaltet ist und die Hülse (17, 17') der Pressfassung (12) radial zum Schlauch (13) verlaufende und zum Schlauch gerichtete Vorsprünge trägt,
**dadurch gekennzeichnet,**
die Hülse (17, 17') eine gleichbleibende Wandstärke (30) besitzt,
dass die Hülse (17, 17') der Pressfassung (12) radial zum Schlauch (13) verlaufende und zum Schlauch gerichtete als Vorsprünge ausgebildete Wandverformungen (19) trägt und dass an der Außenseite der Pressfassung (12) im Bereich dieser Verformungen (19) Vertiefungen (20) vorgesehen sind, morbei nehmen die Vertiefungen (20) bei Überführung in den Befestigungsfall Materialbereiche der Verformungen (19) auf und
dass die radialen Verformungen (19) im Befestigungsfall in axialer Richtung geneigt sind

2. Schlauchkupplung nach Anspruch 1, **dadurch gekennzeichnet, dass** eine einstückige Pressfassung (12) einen hülsenartigen Teil (17) sowie ein Anschlussteil (18) umfasst oder dass eine zweiteilige Pressfassung aus einer Hülse (17') und einem ringförmigen Verlängerungswinkel (18') besteht.

3. Schlauchkupplung nach Anspruch 1 oder 2, **dadurch gekennzeichnet, dass** die Hülse (17, 17') mit einer spiralförmig verlaufenden Verformung (19) sowie mit einer spiralförmig verlaufenden Vertiefung (20) ausgestattet ist, wobei das Anschlussteil (18, 18') die Verbindung mit dem Kupplungselement (11) herstellt.

4. Schlauchkupplung nach Anspruch 1 oder 2, **dadurch gekennzeichnet, dass** die Verformungen (19) bzw. die Vertiefungen (20) durch Stauchung der Hülse (17) der Pressfassung (12) gebildet sind.

5. Schlauchkupplung nach Anspruch 1 oder 2, **dadurch gekennzeichnet, dass** die Verformungen (19) Faltungsbereiche der Hülse (17) der Pressfassung (12) sind.

6. Schlauchkupplung nach einem der Ansprüche 1 bis 3, **dadurch gekennzeichnet, dass** die Verformungen (19) bzw. die Vertiefungen (20) durch ein Rollierverfahren gebildet sind.

7. Schlauchkupplung nach einem der Ansprüche 1 bis 6, **dadurch gekennzeichnet, dass** im Montagefall die Verformungen (19) im Querschnitt asymmetrisch geformt sind, nämlich einen in Richtung Anschlussteil (18) bzw. Kupplungselement (11) versetzten Angriffspunkt (22) für den Angriff an den Schlauch (13) aufweisen.

8. Schlauchkupplung nach Anspruch 7, **dadurch gekennzeichnet, dass** die Verformung (19) im Querschnitt einen asymmetrischen Zahn darstellt und im Befestigungsfall der Angriffspunkt (22) in axialer Richtung, nämlich in Richtung Anschlussteil (18) bzw. Kupplungselement (11) verschoben ist.

9. Schlauchkupplung nach Anspruch 8, **dadurch gekennzeichnet, dass** eine zahnförmige Verformung (19) vorgesehen ist, bei der im Montagefall also bereits vor dem Verpressen der Angriffspunkt (22) in axialer Richtung, nämlich in Richtung Anschlussteil (18) bzw. Kupplungselement (11), ausgerichtet ist.

10. Schlauchkupplung nach den Ansprüchen 8 bis 9, **dadurch gekennzeichnet, dass** im Falle einer in Richtung Schlauch (13) verursachten Zugbelastung die zahnförmige Verformung (19) aufgerichtet ist, wodurch ein stärkeres Verkrallen im Schlauch (13) und somit eine Selbsthemmung bewirkt wird.

11. Schlauchkupplung nach einem der Ansprüche 8 bis 10, **dadurch gekennzeichnet, dass** im Montagefall die Verformung (19) einen asymmetrischen dreieckförmigen Querschnitt aufweist, wobei die Hypotenusenseite des Dreiecks rechts von der Spitze des Zahnes, also vom Angriffspunkt (22), weg verläuft.

12. Schlauchkupplung nach Anspruch 11, **dadurch gekennzeichnet, dass** im Montagefall die Verformung (19) einen asymmetrischen trapezförmigen Querschnitt mit breiter Spitze besitzt.

13. Schlauchkupplung nach Anspruch 11 oder 12, **dadurch gekennzeichnet, dass** im Montagefall die Verformung (19) einen asymmetrischen dreieckförmigen Querschnitt mit abgerundeten Ecken besitzt.

14. Schlauchkupplung nach einem der Ansprüche 1 bis 13, **dadurch gekennzeichnet, dass** das Anschlussteil (18, 18') endseitig einen radialen Schenkel (22) besitzt, welcher eine Schulter (26) des Kupplungselementes (11) im Befestigungsfall hintergreift.

15. Schlauchkupplung nach Anspruch 14, **dadurch gekennzeichnet, dass** im Inneren der Pressfassung (12) im Bereich des Anschlussteils (18, 18') eine Abstufung (21) vorgesehen ist, wobei im Bereich der Abstufung (21) an dem Kupplungselement (11) die radial nach außen weisende Schulter (26) vorgesehen ist.

16. Schlauchkupplung nach einem der Ansprüche 1 bis 15, **dadurch gekennzeichnet, dass** bei der zweiteilige Pressfassung (12) der ringförmige Verlängerungswinkel (18') von einem Ende der Hülse (17') getragen wird und dessen axialer Winkelteil (33) den gleichen Außendurchmesser, wie die Hülse (17') aufweist.

17. Schlauchkupplung nach Anspruch 16, **dadurch gekennzeichnet, dass** der Verlängerungswinkel (18') die Hülse (17') in einem Abstufungsbereich (21) überlagert, hierbei ist im Bereich (21) an dem Kupplungselement 11 eine radial nach außen weisende Schulter (26) vorgesehen, die an ihrem freien Ende eine Mulde (27) besitzt, in die im Befestigungsfall der Abstufungsbereich (21) eindrückbar ist.

## Claims

1. Hose coupling (10), in particular for high pressure hydraulic lines, with a tube-like coupling element (11) attachable on one end to a fixture and exhibiting on the other end a nipple (24) for accommodating a hose (13); with a cylinder-shaped crimp fitting (12) through which the hose (13) is attachable to the coupling element (11);
when being assembled, the crimp fitting (12) grips around the nipple (24) with the slipped-on hose (13) and, when fastening, the crimp fitting (12) with lugs grips onto the hose (13) whereby through application of an exterior radial pressure to the crimp fitting (12) the hose coupling (10) is conducted from the assembly state to the fastening state,
whereby the crimp fitting (12) is designed at least in places as a bush (17, 17'), and the bush (17, 17') of the crimp fitting (12) bears lugs which face and run radially to the hose (13),
thereby **characterized**
**in that** the bush (17, 17') has a constant wall strength (30); in that the bush (17, 17') of the crimp fitting (12) bears wall deformations (19) designed as lugs which face and run radially to the hose (13); and in that provided on the exterior of the crimp fitting (12), in the vicinity of these deformations (19), are indentations (20) whereby upon transfer into the fastening state the indentations (20) accommodate material areas of the deformations (19) ; and in that in the fastening state the radial deformations (19) are tilted in an axial direction.

2. Hose coupling pursuant to Claim 1, thereby **characterized in that** a one-piece crimp fitting (12) comprises a bush-like element (17) as well as a connecting element (18), or **in that** there is a two-piece crimp fitting comprising a bush (17') and a ring-formed extension angle (18').

3. Hose coupling pursuant to Claim 1 or 2, thereby **characterized in that** the bush (17, 17') is equipped with a deformation (19) running spiral-like, as well as with a spiral-like running indentation (20), whereby the connecting element (18, 18') establishes the connection with the coupling element (11).

4. Hose coupling pursuant to Claim I or 2, thereby **characterized in that** the deformations (19) i.e. the indentations (20) are formed by upsetting the bush (17) of the crimp fitting(12).

5. Hose coupling pursuant to Claim 1 or 2, thereby **characterized in that** the deformations (19) are fold areas of the bush (17) of the crimp fitting (12).

6. Hose coupling pursuant to claims I to 3, thereby **characterized in that** the deformations (19) i.e. the indentations (20) are formed by a spinning operation.

7. Hose coupling pursuant to one of the claims 1 to 6, thereby **characterized in that**, for assembly, the deformations (19) in cross-section are asymmetrical in form, namely, they exhibit in the direction of the connecting element (18) i.e. coupling element (11) an offset point of application (22) for application to the hose (13).

8. Hose coupling pursuant to Claim 7, thereby **characterized in that** the deformation (19) in cross-section represents an asymmetrical cog, and the point of application (22) during installation is shifted in the axial direction, namely, in the direction of the connecting element (18) i.e. coupling element (11).

9. Hose coupling pursuant to Claim 8, thereby **characterized in that** a cog-formed deformation (19) is provided which during installation, that is to say, already prior to crimping the point of application (22), is oriented in the axial direction, i.e., in the direction of the connecting element (18) i.e. coupling element (11).

10. Hose coupling pursuant to claims 7 to 9, thereby **characterized in that** in the event of tensile stress caused in the direction of the hose (13), the cog-formed deformation (19) is upright, whereby an intensified clawing into the hose (13) and thereby a self-retention is effected.

11. Hose coupling pursuant to one of the claims 8 to 10, thereby **characterized in that** during installation the deformation (19) exhibits an asymmetrical triangular cross-section, whereby the hypotenuse of the triangle runs off to the right of the tip of the cog, i.e., away from the point of application (22).

12. Hose coupling pursuant to Claim 11, thereby **characterized in that**, for installation, the deformation (19) has an asymmetrical trapezoidal cross-section with a broad tip.

13. Hose coupling pursuant to Claim 11 or 12, thereby **characterized in that**, for installation, the deformation (19) has an asymmetrical triangular cross-section with rounded edges.

14. Hose coupling pursuant to one of the claims 1 to 13, thereby **characterized in that** the connecting element (18, 18') has on one side a radial leg (22) which grips behind a shoulder (26) of the coupling element (11) when fastening.

15. Hose coupling pursuant to Claim 14, thereby **characterized in that** provided inside the crimp fitting (12), in the area of the connecting element (18, 18'), is a grading (21), whereby provided in the area of the grading (21), at the coupling element (11), is the shoulder (26) which faces radially outwards.

16. Hose coupling pursuant to one of the claims 1 to 15, thereby **characterized in that**, for the two-pieced crimp fitting (12), the ring-formed extension angle (18') is borne by one end of the bush (17'), and its axial angle (33) exhibits the same exterior diameter as the bush (17').

17. Hose coupling pursuant to Claim 16, thereby **characterized in that** the extension angle (18") overlays the bush (17') in a grading area (21), whereby provided at the coupling element (11) in the area (21) is a radially outwards facing shoulder (26) which on its free end has a cavity (27) into which the grading area (21) can be pressed when fastening.

## Revendications

1. Accouplement pour flexible (10), en particulier pour conduites hydrauliques haute pression, comprenant un élément raccord (11) de type tubulaire raccordable à une extrémité à une robinetterie et présentant à l'autre extrémité un nipple serti (24) servant à recevoir un flexible (13), avec une monture sertie (12) cylindrique par laquelle il est possible de fixer le flexible (13) contre l'élément d'accouplement (11),
ici en cas montage la monture sertie (12) ceinture le nipple serti (24) avec le flexible (13) enfilé, et en cas de fixation la monture sertie (12) attaque le flexible (13) par des saillies, sachant que l'accouplement pour flexible (10) est transférable du cas de montage vers le cas de fixation en exerçant une pression radiale externe sur la monture sertie (12),
sachant que la monture sertie (12) est configurée au moins localement en forme de douille (17, 17') et que la douille (17, 17') de la monture sertie (12) comporte des saillies présentant un tracé radial par rapport au flexible et orientées vers le flexible (13),
**caractérisé en ce que**
la douille (17, 17') présente une épaisseur de paroi (30) constante, **en ce que** la douille (17, 17') de la monture sertie (12) comporte des déformations de paroi (19) présentant un tracé radial par rapport au flexible (13) et configurées en saillies orientées vers le flexible, et **en ce que** contre le côté extérieur de la monture sertie (12), des creux (20) sont prévus dans la zone de ces déformations (19), sachant que les creux (20) absorbent des parties déformées (19) du matériau pendant la transition vers le cas de fixation, et **en ce qu'**en cas de fixation les déformations (19) radiales sont inclinées dans le sens axial.

2. Accouplement de flexible selon la revendication 1, **caractérisé en ce qu'**une monture sertie (12) monobloc comprend une pièce (17) en forme de douille ainsi qu'une pièce de raccordement (18), ou **en ce qu'**une monture sertie en deux parties se compose d'une douille (17') et d'une équerre de prolongement (18') annulaire.

3. Accouplement de flexible selon la revendication 1 ou 2, **caractérisé en ce que** la douille (17, 17') présente une déformation (19) au tracé de forme spiralée, ainsi qu'un creux (20) au tracé de forme spiralée, sachant que la pièce de raccordement (18, 18') instaure la jonction avec l'élément d'accouplement (11).

4. Accouplement de flexible selon la revendication 1 ou 2, **caractérisé en ce que** les déformations (19) et/ou les creux (20) sont formés par écrasement de la douille (17) de la monture sertie (12).

5. Accouplement de flexible selon la revendication 1 ou 2, **caractérisé en ce que** les déformations (19) sont des zones à plis de la douille (17) équipant la monture sertie (12).

6. Accouplement de flexible selon l'une des revendications 1 à 3, **caractérisé en ce que** les déformations (19) et/ou les creux (20) ont été formés via un procédé de galetage.

7. Accouplement de flexible selon l'une des revendications 1 à 6, **caractérisé en ce qu'**en cas de montage les déformations (19) présentent une section de forme asymétrique, à savoir un point d'attaque (22), décalé en direction de la pièce de raccordement (18) et/ou de l'élément d'accouplement (11), pour attaquer le flexible (13).

8. Accouplement de flexible selon la revendication 7, **caractérisé en ce que** la section de la déformation (19) représente une dent asymétrique et qu'en cas de fixation le point d'attaque (22) est déplacé dans le sens axial, à savoir en direction de la pièce de raccordement (18) et/ou de l'élément d'accouplement (11).

9. Accouplement de flexible selon la revendication 8, **caractérisé en ce qu'**une déformation (19) en forme de dent a été prévue, dans laquelle en cas de montage - donc dès avant le sertissage - le point d'attaque (22) est orienté dans le sens axial, à savoir en direction de la pièce de raccordement (18) et/ou de l'élément d'accouplement (11).

10. Accouplement de flexible selon les revendications 7 à 9, **caractérisé en ce qu'**en cas de contrainte en traction provoquée en direction du flexible (13), la déformation (19) en forme de dent se redresse, ce qui provoque un agrippement accru dans le flexible (13), donc un autoblocage.

11. Accouplement de flexible selon l'une des revendications 8 à 10, **caractérisé en ce qu'**en cas de montage la déformation (19) présente une section asymétrique triangulaire, sachant que le tracé de l'hypoténuse du triangle circule à droite de la pointe de la dent, donc qu'il s'éloigne du point d'attaque (22).

12. Accouplement de flexible selon la revendication 11, **caractérisé en ce qu'**en cas de montage, la déformation (19) présente une section trapézoïdale asymétrique à pointe large.

13. Accouplement de flexible selon la revendication 11 ou 12, **caractérisé en ce qu'**en cas de montage la déformation (19) présente une section triangulaire asymétrique à angles arrondis.

14. Accouplement de flexible selon l'une des revendications 1 à 13, **caractérisé en ce que** la pièce de raccordement (18, 18') présente à son extrémité une branche radiale (22) pénétrant, en cas de fixation, derrière un épaulement (26) de l'élément d'accouplement (11).

15. Accouplement de flexible selon la revendication 14, **caractérisé en ce qu'**à l'intérieur de l'accouplement serti (12), dans la zone de la pièce de raccordement (18, 18'), une gradation (21) a été prévue, sachant que dans la zone de cette gradation (21) est prévu, contre l'élément d'accouplement (11), l'épaulement (26) pointant radialement vers l'extérieur.

16. Accouplement de flexible selon l'une des revendications 1 à 15, **caractérisé en ce que** dans la monture sertie (12) en deux parties, l'équerre de prolongement (18') annulaire est supportée par une extrémité de la douille (17'), et que sa partie coudée (33) axiale présente le même diamètre extérieur que la douille (17').

17. Accouplement de flexible selon la revendication 16, **caractérisé en ce que** l'équerre de prolongement (18') recouvre la douille (17') dans une zone à gradation (21), sachant qu'ici dans la zone (21) a été prévu contre l'élément d'accouplement (11) un épaulement (26) pointant radialement vers l'extérieur, épaulement dont l'extrémité libre possède une auge (27) dans laquelle il est possible, en cas de fixation, d'enfoncer la zone à gradation (21).
